# EUROPEAN PATENT SPECIFICATION

(11) **EP 3 634 054 B1**
(45) Date of publication and mention of the grant of the patent: **29.01.2025**
(21) Application number: 18814139.4
(22) Date of filing: 16.05.2018
(51) Int. Cl.: H04W 4/06

(54) **METHOD AND APPARATUS FOR TRANSMITTING SERVICE DATA**
VERFAHREN UND VORRICHTUNG ZUR ÜBERTRAGUNG VON DIENSTDATEN
PROCÉDÉ ET APPAREIL DE TRANSMISSION DE DONNÉES DE SERVICE

(30) Priority: 09.06.2017 CN 201710434630
(43) Date of publication of application: 08.04.2020
(73) Proprietor: Huawei Technologies Co., Ltd., Longgang District Shenzhen, Guangdong 518129 (CN)
(72) Inventor: WANG, Hejun, Shenzhen Guangdong 518129 (CN); LI, Mingchao, Shenzhen Guangdong 518129 (CN); CAO, Zhenzhen, Shenzhen Guangdong 518129 (CN); LIU, Hang, Shenzhen Guangdong 518129 (CN); YU, Yinghui, Shenzhen Guangdong 518129 (CN)
(74) Representative: Epping - Hermann - Fischer
(86) International application number: PCT/CN2018/087159
(87) International publication number: WO 2018/223824

(56) References cited:
- EP-A1- 3 373 605
- WO-A1-2017/014514
- WO-A1-2017/076056
- CN-A- 101 969 369
- CN-A- 102 355 728
- CN-A- 103 037 512
- US-A1- 2014 307 546
- SONY: "Solution for optimized latency for eNB type RSU Relay function", vol. SA WG2, no. Sophia Antipolis, FRANCE; 20160411 - 20160415, 5 April 2016 (2016-04-05), XP051086554, Retrieved from the Internet <URL:http://www.3gpp.org/ftp/tsg_sa/WG2_Arch/TSGS2_114_Sophia_Antipolis/Docs/> [retrieved on 20160405]
- ZTE: "Some considerations on multi-cell multicast/broadcast for V2X", vol. RAN WG2, no. Malmö, Sweden; 20151005 - 20151009, 4 October 2015 (2015-10-04), XP051005202, Retrieved from the Internet <URL:http://www.3gpp.org/ftp/Meetings_3GPP_SYNC/RAN2/Docs/> [retrieved on 20151004]

## Description

### TECHNICAL FIELD

Embodiments of the present invention relate to the field of communications technologies, and in particular, to a service data transmission method and an apparatus.

### BACKGROUND

In an existing vehicle-to-everything (Vehicle-to-Everything, V2X) service, when data of the V2X service needs to be forwarded by a base station for locally broadcasting, the data needs to be uploaded to a core network by the base station. After routing, addressing, and forwarding the data, the core network transmits the data to the base station in a downlink manner for broadcasting. Broadcasting of the V2X service is mainly performed within a range near a terminal, that is, performed within coverage of a cell in which the terminal is located or a neighboring cell. It can be learned that, addressing and forwarding of the data of the V2X service by using the core network are unnecessary steps, and addressing and forwarding of the data of the V2X service by using the core network lead to an unnecessary potential latency. This does not meet a low latency requirement of the V2X service.

From WO 2017/014514 A1 and WO 2017/076056 A1 communication methods involving V2X services are known. In particular, WO 2017/014514 teaches a V2X communication system. A vehicle UE i.e. a V-UE may communicate with other V-UEs or with a road side unit RSU. The RSU may be an eNB RSU-E or a stationary UE. The RSU may determine to relay i.e. broadcast the message from the V-UE to other V-UE devices.

### SUMMARY

Service data transmission methods and a corresponding network device and a corresponding terminal according to the independent claims are provided. Dependent claims provide preferred embodiments, e.g. to reduce a data transmission latency.

According to a first aspect, a service data transmission method for a vehicle-to-everything, V2X, service is provided. The method is performed by a first network device, and the first network device is, for example, a base station. The method includes: obtaining, by the first network device, first configuration information, where the first configuration information includes a first identifier and a first transmission mode corresponding to the first identifier, and the first transmission mode corresponding to the first identifier is a mode in which transmission is performed by using an access network; receiving, by the first network device, first service data and a second identifier that are sent by a terminal; determining, by the first network device based on the first identifier and the second identifier, that a transmission mode of the first service data is the first transmission mode; and transmitting the first service data based on the first transmission mode. The transmitting, by the first network device, the first service data based on the first transmission mode is directly and locally performed without using a core network.

In this example, the first network device may determine, based on the second identifier sent by the terminal and the first configuration information, the transmission mode of the first service data sent by the terminal. If the second identifier matches the first identifier, the transmission mode of the first service data is the mode in which transmission is performed by using the access network. In this case, the first network device may directly transmit the first service data locally without using a core network. Obviously, a redundant step in a data transmission process is removed, thereby shortening a data transmission path, and reducing a data transmission latency.

In a possible design, the obtaining, by the first network device, first configuration information includes: obtaining, by the first network device, preconfigured information, where the preconfigured information includes the first configuration information; or receiving, by the first network device, control signaling sent by a second network device, where the control signaling carries the first configuration information.

For example, the preconfigured information may be preconfigured on the first network device, for example, preconfigured on the first network device by a staff member, and the first network device may directly obtain the preconfigured information locally. If the first configuration information is obtained in this manner, no excessive signaling interaction needs to be performed between the first network device and another network device, so that a transmission resource can be saved. Alternatively, the preconfigured information may be preconfigured in the core network, for example, configured on an MME. The MME may send the preconfigured information to the first network device in advance, and the first network device stores the preconfigured information. In this case, the first network device may also directly obtain the preconfigured information locally. Alternatively, the first configuration information may be preconfigured on the second network device. For example, the first network device sends a request message to the second network device, to request to obtain the first configuration information. After receiving the request message, the second network device may send, to the first network device, the control signaling that carries the first configuration information. In this manner, the first network device may obtain the first configuration information when required, and may not obtain the first configuration information when not required. A storage resource of the first network device may also be saved provided that the first network device can normally obtain the first configuration information.

In a possible design, the first identifier is a data radio bearer identifier between the terminal and the first network device, a flow identifier of a service flow to which the service data belongs, or a specific field in the flow identifier or the data radio bearer identifier; and the second identifier is the data radio bearer identifier between the terminal and the first network device, the flow identifier of the service flow to which the first service data belongs, or the specific field in the flow identifier or the data radio bearer identifier. The first identifier and the second identifier are identifiers of a same type or of different types.

It may be learned that this example provides a plurality of optional first identifiers and second identifiers, and different first identifiers and second identifiers may be selected as required. In addition, the first identifier and the second identifier may have a same type. For example, both the first identifier and the second identifier are the flow identifiers of the service flow to which the service data belongs. Alternatively, the first identifier and the second identifier may have different types. For example, the first identifier is the specific field in the flow identifier of the service flow to which the service data belongs, and the second identifier is the flow identifier of the service flow to which the service data belongs or the bearer identifier. All cases fall within the protection scope of the examples.

In a possible design, the transmitting, by the first network device, the first service data based on the first transmission mode includes: determining, by the first network device, a downlink transmission mode of second service data based on a service type of the first service data, where the second service data is service data obtained by converting the first service data to downlink data when the first service data is transmitted by using the access network, and the downlink transmission mode is a downlink broadcast mode; and transmitting, by the first network device, the second service data based on the determined downlink transmission mode.

The first service data is transmitted in the first transmission mode. In the first transmission mode, the data sent by the terminal first arrives at the first network device, and then is broadcast on a first network device side. In other words, the first transmission mode includes an uplink transmission process and a downlink transmission process. Therefore, the first network device needs to determine the downlink transmission mode. The first service data is service data sent by the terminal to the first network device. To distinguish the uplink transmission process from the downlink transmission process, the service data obtained by converting the first service data to the downlink data when the first service data is transmitted by using the access network is referred to as the service data, in other words, the first network device needs to determine the downlink transmission mode of the second service data.

In this example, the first network device may determine the downlink transmission mode of the second service data based on the type of the first service data. Generally, a type of the service data may determine a transmission range of the service data and the like. In this way, a downlink transmission mode of the service data is determined based on the type of the service data, so that a determining result is relatively accurate.

In a possible design, the first service data further carries quality of service information. In this case, the first network device may further determine, base on the quality of service information and uplink overheads for transmitting the first service data, downlink quality of service information that needs to be satisfied for transmitting the second service data, and select a downlink bearer for the second service data based on the determined downlink quality of service information.

To transmit the second service data, the first network device further needs to determine the downlink bearer. In this example, the first network device may determine, based on the quality of service information carried in the first service data and the uplink overheads for transmitting the first service data, the downlink quality of service information that needs to be satisfied for transmitting the second service data, to select the downlink bearer for the second service data based on the determined downlink quality of service information. The downlink bearer determined in this manner is relatively compliant with an actual requirement of the second service data, and can not only be normally used to transmit the second service data, but also be used to avoid a resource waste.

In a possible design, if the first network device determines that the downlink transmission mode of the second service data is the downlink broadcast mode, the first configuration information further includes a first broadcast indication and a downlink broadcast mode corresponding to the first broadcast indication. In this case, the method further includes: receiving, by the first network device, a second broadcast indication sent by the terminal; and determining, by the first network device, a downlink broadcast mode of the second service data based on the first broadcast indication, the downlink broadcast mode, and the second broadcast indication, where the downlink broadcast mode includes broadcasting in a cell in which the first network device is located, or transmitting the second service data to a cell in which a neighboring first network device is located for broadcasting, or broadcasting in a cell in which the first network device is located and transmitting the second service data to a cell in which a neighboring first network device is located for broadcasting.

This example provides a plurality of downlink broadcast modes. Therefore, the first network device needs to select one from the plurality of downlink broadcast modes to transmit the second service data. The first network device may determine the downlink broadcast mode of the second service data based on the second broadcast indication sent by the terminal and the first configuration information. An appropriate downlink broadcast mode may be selected for the second service data in this manner, so that the second service data can be broadcast in an appropriate range, and better works.

According to a second aspect, a service data transmission method for a vehicle-to-everything, V2X, service is provided. The method is performed by a terminal. The method includes: sending, by the terminal, first service data and a second identifier to a first network device, where the second identifier is used by the first network device to determine a transmission mode of the first service data; and receiving, by the terminal, second service data transmitted by the first network device in a first transmission mode, where the first transmission mode is determined based on the second identifier and is a mode in which transmission is performed by using an access network, and the second service data is service data obtained by converting the first service data to downlink data when the first service data is transmitted by using the access network. The receiving, by the terminal, second service data transmitted by the first network device in a first transmission mode is directly and locally performed without using a core network.

In this example, the terminal sends not only the first service data to the first network device, but also the second identifier to the first network device. As can be learned from the description of the first aspect, the first network device may determine, based on the second identifier sent by the terminal and the first configuration information, the transmission mode of the first service data sent by the terminal. If the second identifier matches the first identifier, the transmission mode of the first service data is the mode in which transmission is performed by using the access network, and the first network device may directly transmit the first service data locally without using a core network. Obviously, a redundant step in a data transmission process is removed, thereby shortening a data transmission path, and reducing a data transmission latency.

In a possible design, the second identifier is a data radio bearer identifier between the terminal and the first network device, a flow identifier of a service flow to which the first service data belongs, or a specific field in the flow identifier or the data radio bearer identifier.

In a possible design, the method further includes: sending, by the terminal, a second broadcast indication to the first network device, where the second broadcast indication is used by the first network device to determine a downlink broadcast mode of the second service data, where the downlink broadcast mode includes broadcasting in a cell in which the first network device is located, or transmitting the second service data to a cell in which a neighboring first network device is located for broadcasting, or broadcasting in a cell in which the first network device is located and transmitting the second service data to a cell in which a neighboring first network device is located for broadcasting.

This example provides a plurality of downlink broadcast modes. Therefore, the first network device needs to select one from the plurality of downlink broadcast modes to transmit the second service data. The first network device may determine the downlink broadcast mode of the second service data based on the second broadcast indication sent by the terminal and the first configuration information. Therefore, the terminal may send the second broadcast indication to the first network device. An appropriate downlink broadcast mode may be selected for the second service data in this manner, so that the second service data can be broadcast in an appropriate range, and better works.

According to a third aspect, a network device is provided. The network device has functions for implementing the network device in the foregoing method design. These functions may be implemented by hardware, or may be implemented by hardware executing corresponding software. The hardware or the software includes one or more units corresponding to the functions.

The network device includes a processing unit and a receiving unit. The processing unit and the receiving unit may perform corresponding functions in the method provided in any one of the first aspect or the possible designs of the first aspect.

According to a fourth aspect, a terminal is provided. The terminal has functions for implementing the terminal in the foregoing method design. These functions may be implemented by hardware, or may be implemented by hardware executing corresponding software. The hardware or the software includes one or more units corresponding to the functions.

The terminal includes a sending unit and a receiving unit. The sending unit and the receiving unit may perform corresponding functions in the method provided in any one of the second aspect or the possible designs of the second aspect.

### BRIEF DESCRIPTION OF DRAWINGS

FIG. 1 is a schematic diagram of transmitting data of a V2X service by using a D2D technology;
FIG. 2 is a schematic diagram of transmitting service data by using a core network;
FIG. 3 is a schematic diagram of an application scenario according to an example;
FIG. 4 is a schematic diagram of an application scenario according to an example;
FIG. 5 is a flowchart of a service data transmission method according to an example;
FIG. 6 is a schematic structural diagram of a network device according to an example; and
FIG. 7 is a schematic structural diagram of a terminal according to an example.

### DESCRIPTION OF EMBODIMENTS

To make objectives, technical solutions, and advantages of examples clearer, the examples are described below in detail with reference to accompanying drawings.

A technology described in this specification may be applied to various communications systems, such as a long term evolution (Long Term Evolution, LTE) system, a fifth-generation mobile communications system (5G), and another such communications system.

In the following, some terms of the examples are described, to help a person skilled in the art have a better understanding.
(1) A terminal refers to a device that provides a user with voice and/or data connectivity, for example, includes a handheld device with a wireless connection function, or a processing device connected to a wireless modem. The terminal may communicate with a core network by using a radio access network (Radio Access Network, RAN), and exchange voice and/or data with the RAN. The terminal may include a vehicle, user equipment (User Equipment, UE), a wireless terminal device, a mobile terminal device, a subscriber unit (Subscriber Unit), a subscriber station (Subscriber Station), a mobile station (Mobile Station), a mobile console (Mobile), a remote station (Remote Station), an access point (Access Point, AP), a remote terminal device (Remote Terminal), an access terminal device (Access Terminal), a user terminal device (User Terminal), a user agent (User Agent), a user device (User Device), or the like. For example, the terminal may include a mobile phone (or referred to as a "cellular" phone), a computer having a mobile terminal device, a dedicated terminal device in a narrow band Internet of Things (Narrow Band Internet of Things, NB-IoT), and a portable, pocket-sized, handheld, computer-embedded, or vehicle-mounted mobile apparatus. For example, the terminal may be a device such as a personal communication service (Personal Communication Service, PCS) phone, a cordless telephone set, a session initiation protocol (SIP) phone, a wireless local loop (Wireless Local Loop, WLL) station, or a personal digital assistant (Personal Digital Assistant, PDA).
   In the examples, the terminal may further include a V2X device, for example, an on-board unit (On Board Unit, OBU) in a vehicle. In addition, an example in which the terminal is the V2X device is mainly used below.
(2) A network device includes, for example, an access network device and a core network device. The access network device includes, for example, a base station (for example, an access point), and may be a device that communicates with a wireless terminal over an air interface in an access network by using one or more sectors. The base station may be configured to mutually convert a received over-the-air frame and an internet protocol (IP) packet, and serve as a router between the terminal and a remaining portion of the access network, where the remaining portion of the access network may include an IP network. The base station may coordinate attribute management of the air interface. For example, the base station may include an evolved NodeB (eNB or e-NodeB, evolutional Node B) in the LTE system or an evolved LTE system (LTE-Advanced, LTE-A), a small cell (micro/pico eNB) in the LTE system or the LTE-A system, a next generation nodeB (next generation node B, gNB) in an NR system, a transmission point (transmission point, TP), or a transmission/reception point (transmission and receiver point, TRP). This is not limited in the examples.
   The core network device includes, for example, a mobility management entity (Mobility Management Entity, MME), or may include a corresponding functional entity in the NR system.
(3) For V2X, currently a vehicle may obtain road condition information or receive information in a timely manner through vehicle to vehicle communication (Vehicle to Vehicle, V2V), vehicle to infrastructure communication (Vehicle to Infrastructure, V2I), vehicle to pedestrian communication (Vehicle to Pedestrian, V2P), vehicle to network communication (Vehicle to Network, V2N), or the like. These communication modes may be collectively referred to as V2X communication. Most common V2V and V2I are used as examples: A vehicle may broadcast information such as a speed, a driving direction, a specific location, and whether an emergency brake is stepped on to a surrounding vehicle through V2V communication, and the surrounding vehicle obtains the information, so that a driver can better perceive a traffic condition beyond a line-of-sight distance, to make an advance prediction on a danger condition, and make a timely concession. For V2I communication, in addition to interaction of the foregoing safety information, a roadside infrastructure may further provide various service information, data network accesses, and the like for the vehicle, and functions such as electronic toll collection and intra-vehicle entertainment can greatly improve traffic intelligence. A network used by V2X communication is usually referred to as Internet of Vehicles (IOV).
(4) A device-to-device (Device to Device, D2D) technology may support direct data communication between terminals by using a dedicated air interface technology, and is an end-to-end direct communications technology. A biggest difference between a conventional cellular communications technology and the D2D technology lies in that, with support of the D2D technology, the terminals may directly communicate without relaying by a base station, and the base station may perform resource configuration, scheduling, coordination, and the like, to assist the terminals in directly communicating with each other. The D2D technology can be applied to an Internet of Vehicles (IOV) service.
(5) APC5 interface is a direct communications interface between terminal devices introduced in a D2D project of the 3rd generation partnership project (3rd Generation Partnership Project, 3GPP) release 12 (Rel-12). Data transmission may be performed between neighboring terminals within an effective communication range of the PC5 by using a direct link, and forwarding does not need to be performed by using a central node (for example, a base station), and information transmission does not need to be performed by using a conventional cellular link. Therefore, communication is relatively fast and convenient.
(6) In this specification, service data mainly includes data of a V2X service, for example, data of a local broadcast service of a non (non)-IP service of V2X, that is, the service data in the examples may include local broadcast data of the non-IP service of V2X.
(7) The terms "system" and "network" may be interchangeably used in the examples. "A plurality of' refers to two or more than two. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

To better understand the technical solutions provided in the examples, the technical background of the examples is first described below.

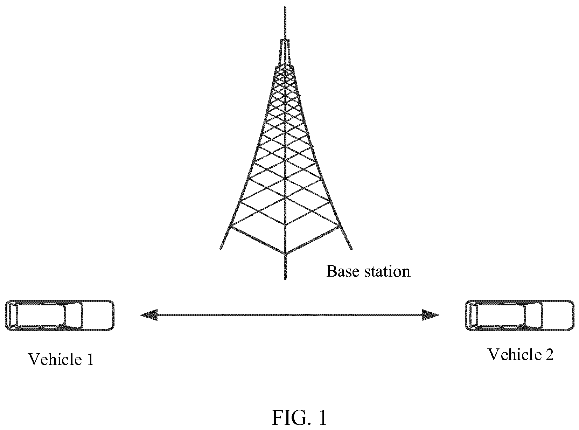

LTE is a mainstream wireless communications technology at present. The D2D technology is used as an important feature and has been standardized, and supports direct communication between terminals. Considering that some communication scenarios of a V2X service (for example, V2V/V2I) also belong to terminal direct communication, data of the V2X service may be transmitted by using the D2D technology. Referring to FIG. 1, a base station, a vehicle 1, and a vehicle 2 are included. The vehicle 1 and the vehicle 2 may directly communicate in a direct connection manner. However, sometimes, due to blocking of a building (for example, a crossroad) or a requirement that a vehicle needs to transmit a message farther, another communication mode needs to be used. For example, relaying by the base station, the vehicle may transmit the data of the V2X service to the base station, and then the base station transmits the data of the V2X service to another vehicle, to implement Internet of Vehicles communication. An interface used by the vehicle to communicate with a surrounding terminal in a direct connection manner may be a PC5 interface, and an interface between the vehicle and the base station may be a Uu interface.

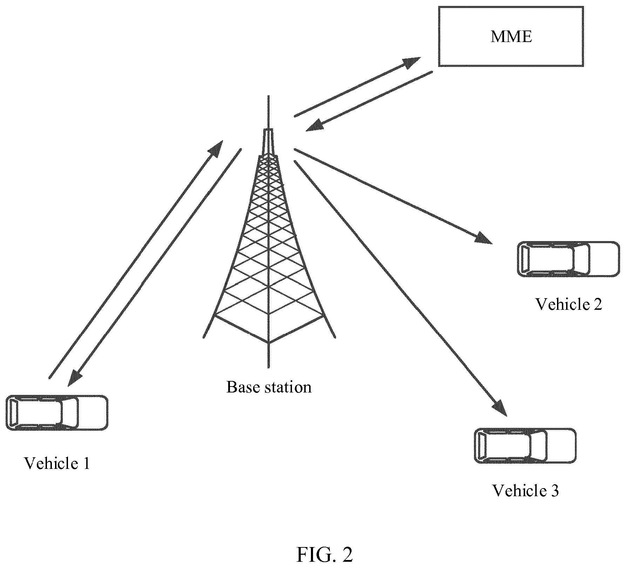

However, in an existing V2X service, when data of the V2X service needs to be forwarded by the base station for locally broadcasting, the data of the V2X service needs to be uploaded to a core network by the base station. After routing, addressing, and forwarding the data of the V2X service, the core network transmits the data of the V2X service to the base station in a downlink manner for broadcasting. FIG. 2 includes a base station, an MME, a vehicle 1, a vehicle 2, and a vehicle 3. For example, if the vehicle 1 generates data of a V2X service that needs to be locally broadcast, the vehicle 1 sends the data to the base station, and the base station forwards the data of the V2X service to the MME in a core network. The MME routes, addresses, and forwards the data of the V2X service, and then sends the data of the V2X service to the base station, and the base station broadcasts the data of the V2X service.

Broadcasting of the V2X service is mainly performed within a range near the terminal, that is, performed within coverage of a cell in which the terminal is located or a neighboring cell. It can be learned that, addressing and forwarding of the V2X data by using the core network are unnecessary steps. In addition, addressing and forwarding of the data of the V2X service by using the core network bring an unnecessary potential latency. This does not meet a low latency requirement of the V2X service.

In view of this, an example provides a new service data transmission method. In this example, a first network device may determine, based on a second identifier sent by a terminal and first configuration information, a transmission mode of first service data sent by the terminal. If the second identifier matches a first identifier, the transmission mode of the first service data is a mode in which transmission is performed by using an access network. In this case, the first network device may directly transmit the first service data locally without using a core network. Obviously, a redundant step in a data transmission process is removed, thereby shortening a data transmission path, and reducing a data transmission latency.

Before the technical solution provided in the examples is described, application scenarios of the examples are first described.

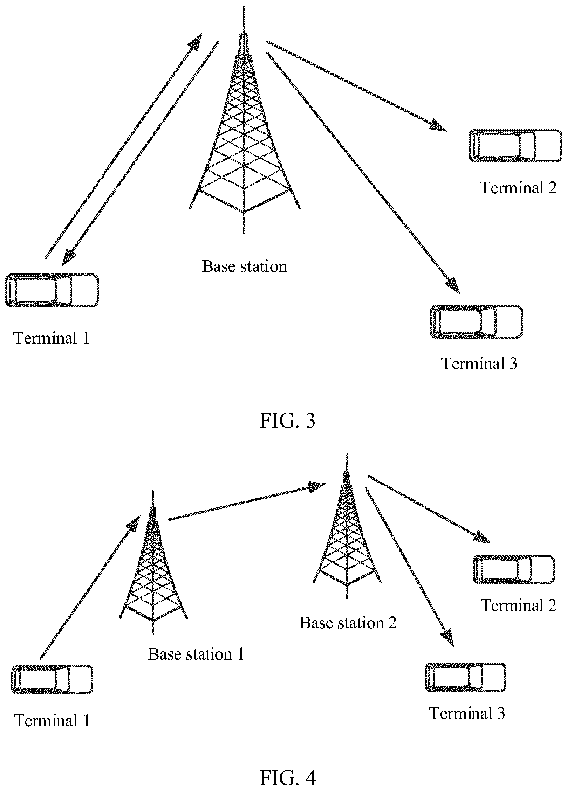

FIG. 3 is a schematic diagram of an application scenario according to an example. FIG. 3 includes a terminal 1, a terminal 2, a terminal 3, and a base station. For example, if the terminal 1 generates service data that needs to be locally broadcast, the terminal 1 sends the service data to the base station, and the base station may directly broadcast the service data without using a core network. FIG. 4 is a schematic diagram of another application scenario according to an example. FIG. 4 includes a terminal 1, a terminal 2, a terminal 3, a base station 1, and a base station 2. The base station 1 and the base station 2 are neighboring base stations, the terminal 1 is a terminal covered by the base station 1, and the terminal 2 and the terminal 3 are terminals covered by the base station 2. For example, if the terminal 1 generates service data that needs to be locally broadcast, the terminal 1 sends the service data to the base station 1, the base station 1 then sends the service data to the base station 2, and the base station 2 may broadcast the service data without using a core network. In addition to the base station 2, the base station 1 may also perform broadcasting. In FIG. 4, an example in which broadcasting is performed by only the base station 2 is used.

An example in which all the terminals in FIG. 3 and FIG. 4 are vehicles is used.

A technical solution provided in an example is described below with reference to the accompanying drawings.

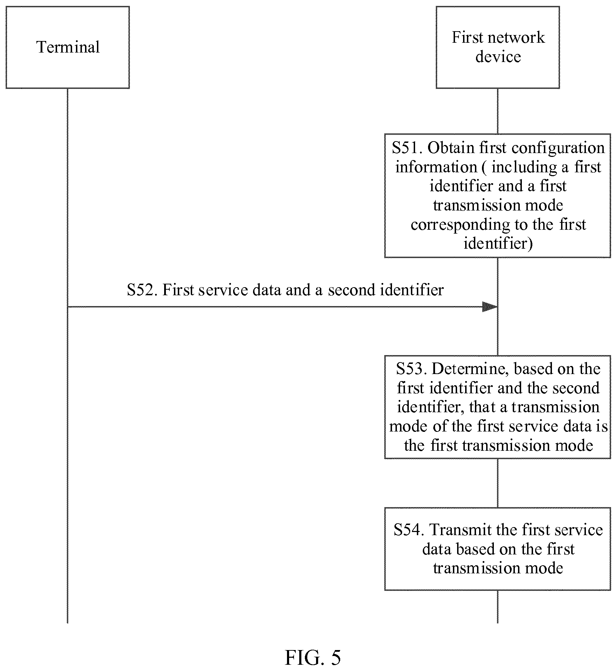

An example provides a service data transmission method. The method may be performed by a first network device, and the first network device is, for example, a base station. In the following description process, an example in which the method is applied to the application scenario shown in FIG. 3 or the application scenario shown in FIG. 4 is used. FIG. 5 is a flowchart of the method. S51. The first network device obtains first configuration information.

In this example, the first configuration information includes a first identifier and a first transmission mode corresponding to the first identifier, in other words, it may be considered that the first configuration information includes a correspondence between the first identifier and the first transmission mode. The first transmission mode is an end-to-end transmission mode, and is specifically a mode in which transmission is performed by using an access network. The mode in which transmission is performed by using the access network means that service data sent by a terminal is directly forwarded on a base station side without using a core network. For example, the base station may broadcast the service data by using a Uu interface, or forward the service data to a neighboring base station by using an X2 interface.

The first network device may obtain the first configuration information in different manners.

In an example, the first network device may obtain preconfigured information, and the preconfigured information includes the first configuration information.

For example, the preconfigured information may be preconfigured on the first network device, for example, preconfigured on the first network device by a staff member, and the first network device may directly obtain the preconfigured information locally when implementing S51. Alternatively, the preconfigured information may be preconfigured in the core network, for example, configured on an MME. The MME may send the preconfigured information to the first network device in advance, and the first network device stores the preconfigured information. In this case, when implementing S51, the first network device may also directly obtain the preconfigured information locally.

In another example, the first network device receives control signaling sent by a second network device, and the control signaling carries the first configuration information. The second network device is a device in the core network, for example, the MME.

In this case, the first configuration information may be preconfigured on the second network device. When implementing S51, the first network device may send a request message to the second network device, to request to obtain the first configuration information. After receiving the request message, the second network device may send the control signaling that carries the first configuration information to the first network device.

Certainly, the foregoing several manners are merely examples. This example does not limit a manner in which the first network device obtains the first configuration information.

In this example, the first identifier may be a bearer identifier of an uplink bearer between the terminal and the access network. For example, if the first network device is a base station, the first identifier may be a data radio bearer (Data Radio Bearer, DRB) identifier, where the DRB is a bearer between the terminal and an air interface of the base station, and is used to carry user plane data. Alternatively, the first identifier may be a specific field in the data radio bearer identifier, a flow identifier of a service flow to which the service data belongs, a specific field in the flow identifier, or a temporarily defined identifier. This is not limited in this example.

The first identifier may include an identifier corresponding to a non-IP service of V2X, for example, include a bearer identifier of an uplink bearer between the terminal and the core network when the non-IP service of V2X is processed, or include a flow identifier of a service flow to which service data of the non-IP service of V2X belongs. Broadcasting of a V2X service is mainly performed in a range near the terminal, that is, performed within coverage of a cell in which the terminal is located or a neighboring cell, and the non-IP service of V2X does not require addressing. Therefore, addressing and forwarding of the non-IP service data of V2X by using the core network are unnecessary steps. Therefore, in this example, the mode in which transmission is performed by using the access network without using the core network may be set for the non-IP service of V2X, thereby reducing the redundant steps and reducing a latency.

S52. The terminal sends service data and a second identifier to the first network device, and the first network device receives the service data and the second identifier that are sent by the terminal. For example, the service data is referred to as first service data.

For example, the second identifier may be added to the first service data and sent together with the first service data, or the second identifier and the first service data may be sent as two independent parts. In addition, if the second identifier and the first service data are used as two independent parts, the terminal may send the first service data and the second identifier together, or may first send the first service data and then send the second identifier, or may first send the second identifier and then send the first service data. This is not limited in this example.

In this example, the second identifier may be the bearer identifier of the uplink bearer between the terminal and the access network, for example, the DRB identifier, or the second identifier may be a specific field in the bearer identifier, for example, the specific field in the DRB identifier, or the second identifier may be the flow identifier of the service flow to which the first service data belongs, the specific field in the flow identifier, or the temporarily defined identifier. This is not limited in this example.

The first identifier and the second identifier may be identifiers of a same type. For example, both the first identifier and the second identifier are bearer identifiers, or both the first identifier and the second identifier are flow identifiers. Alternatively, the first identifier and the second identifier may be identifiers of different types. For example, the first identifier is the bearer identifier, and the second identifier is the flow identifier, or the first identifier is the bearer identifier, and the second identifier is the specific field in the bearer identifier.

S53. The first network device determines, based on the first identifier and the second identifier, that a transmission mode of the first service data is the first transmission mode. It may be understood that the first network device determines the transmission mode of the first service data based on the second identifier and the first configuration information.

After receiving the second identifier, the first network device matches the second identifier with the first identifier. If the second identifier successfully matches the first identifier, the first network device may consider the first service data as service data of the non-IP service of V2X, and determine the transmission mode of the first service data to be the first transmission mode. However, if the second identifier fails to match the first identifier, the first service data may not be the service data of the non-IP service of V2X. For such first service data, the first network device may transmit the first service data according to a specification in the prior art, for example, transmit the first service data by using the mode in which transmission is performed by using the core network. To be specific, the service data sent by the terminal is forwarded by the base station and the core network, and then transmitted to a peer terminal by the base station. Alternatively, the first network device may still transmit the first service data based on the first transmission mode. This is specifically set by a system or specified in a protocol.

If the first identifier and the second identifier are identifiers of a same type, and if the first identifier is the same as the second identifier, the first network device determines that the first identifier successfully matches the second identifier; otherwise, the first network device determines that the first identifier fails to match the second identifier.

If the first identifier and the second identifier are identifiers of different types, a correspondence exists between the first identifier and the second identifier. For example, the first network device may store the correspondence between the first identifier and the second identifier in advance. In this case, if the first network device determines that a correspondence exists between the received second identifier and any first identifier in the first configuration information, the first network device determines that the first identifier successfully matches the second identifier; and if the first network device determines that no correspondence exists between the received second identifier and any first identifier in the first configuration information, the first network device determines that the first identifier fails to match the second identifier. The correspondence between the first identifier and the second identifier may also be included, for example, in the preconfigured information, or the second network device may send the first configuration information and the correspondence between the first identifier and the second identifier to the first network device by using the control signaling, or the first network device may obtain the correspondence between the first identifier and the second identifier in another manner. This is not limited in this example. S54. The first network device transmits the first service data based on the determined first transmission mode, and the terminal receives the first service data transmitted by the first network device in the first transmission mode. To be specific, if the first identifier successfully matches the second identifier, the first network device transmits the first service data based on the first transmission mode.

The first service data is transmitted in the first transmission mode. In the first transmission mode, data sent by the terminal first arrives at the base station, and then is broadcast on the base station side. That is, the first transmission mode includes an uplink transmission process and a downlink transmission process, and the uplink transmission process is actually completed in S52. Therefore, in this case, the downlink transmission process remains to be completed.

Although both the uplink transmission process and the downlink transmission process are included in the first transmission mode, the first transmission mode may also include different downlink transmission modes. Therefore, the first network device needs to determine a downlink transmission mode of the first service data. The first service data is the service data sent by the terminal to the first network device. To distinguish the uplink transmission process from the downlink transmission process, service data obtained by converting the first service data to downlink data when the first service data is transmitted by using the access network is referred to as second service data, in other words, the first network device needs to determine the downlink transmission mode of the second service data. It should be understood that the first service data and the second service data are same data, and different names are given to distinguish the uplink transmission process from the downlink transmission process.

In this example, the first network device may determine the downlink transmission mode of the second service data based on a type of the first service data. As described above, the first service data may be broadcast service data of the non-IP service of V2X. Therefore, the type of the first service data may be a "broadcast type", and the first network device may determine a downlink transmission mode corresponding to the service data of the "broadcast type". For example, the first network device determines that the downlink transmission mode corresponding to the service data of the "broadcast type" is the downlink broadcast mode, that is, determines that the downlink transmission mode of the first service data is the downlink broadcast mode.

As described above, the technical solution provided in this example may be applied to the application scenario shown in FIG. 3 or the application scenario shown in FIG. 4. That is, this example provides a plurality of downlink broadcast modes, and the first network device needs to select one from the plurality of downlink broadcast modes to transmit the second service data. The plurality of downlink broadcast modes include, but are not limited to, broadcasting in a cell in which the base station is located, or transmitting the second service data to a cell in which a neighboring base station is located for broadcasting, or broadcasting in a cell in which the base station is located and transmitting the second service data to a cell in which a neighboring base station is located for broadcasting. The mode of broadcasting in the cell in which the base station is located may be applied to the application scenario shown in FIG. 3, and the mode of transmitting the second service data to the cell in which the neighboring base station is located for broadcasting, or broadcasting in the cell in which the base station is located and transmitting the second service data to the cell in which the neighboring base station is located for broadcasting may be applied to the application scenario shown in FIG. 4. For the first network device, the plurality of downlink broadcast modes include broadcasting in a cell in which the first network device is located, or transmitting the second service data to a cell in which a neighboring first network device is located for broadcasting, or broadcasting in a cell in which the first network device is located and transmitting the second service data to a cell in which a neighboring first network device is located for broadcasting.

In an example, the first network device may determine the downlink broadcast mode of the second service data based on a second broadcast indication, a first broadcast indication, and a downlink broadcast mode. It may be understood as that the first network device may determine the downlink broadcast mode of the second service data based on the second broadcast indication and a correspondence between a broadcast indication and a broadcast mode.

Specifically, the first configuration information may further include the first broadcast indication and a downlink broadcast mode corresponding to the first broadcast indication, that is, include a correspondence between the first broadcast indication and the downlink broadcast mode. In S52 in this example, in addition to sending the first service data and the second identifier to the first network device, the terminal may further send the second broadcast indication to the first network device, and the first network device receives the second broadcast indication. For example, the second broadcast indication may be added to the first service data and sent with the first service data together, or the second broadcast indication and the first service data may be sent as two independent parts. In addition, if the second broadcast indication and the first service data are used as two independent parts, the terminal may send the first service data and the second broadcast indication together, or may first send the first service data and then send the second broadcast indication, or may first send the second broadcast indication and then send the first service data. This is not limited in this example.

In this case, the first network device may match the first broadcast indication with the second broadcast indication, and if the second broadcast indication successfully matches any first broadcast indication included in the first configuration information, the first network device determines that a downlink broadcast mode corresponding to the successfully matched first broadcast indication in the first configuration information is the downlink broadcast mode of the second service data. If the second broadcast indication fails to match all first broadcast indications included in the first configuration information, the first network device may select any downlink broadcast mode for the second service data, or the first network device may use another transmission mode to transmit the second service data. This is not limited in this example.

The first broadcast indication is, for example, a temporarily specified identifier, and the second broadcast indication is also, for example, a temporarily specified identifier. In addition, the first broadcast indication and the second broadcast indication may be set in a same manner or different manners. If the first broadcast indication and the second broadcast indication are set in the same manner, that is, if the first broadcast indication is the same as the second broadcast indication, the first network device determines that the first broadcast indication successfully matches the second broadcast indication; otherwise, the first network device determines that the first broadcast indication fails to match the second broadcast indication. If the first broadcast indication and the second broadcast indication are set in different manners, a correspondence may exist between the first broadcast indication and the second broadcast indication. In this case, if a correspondence exists between the second broadcast indication and any first broadcast indication included in the first configuration information, the first network device determines that the second broadcast indication successfully matches the first broadcast indication in the first configuration information; and if no correspondence exists between the second broadcast indication and any first broadcast indication included in the first configuration information, the first network device determines that the second broadcast indication fails to match the first broadcast indication.

Furthermore, in addition to determining the downlink transmission mode of the second service data, the first network device may further determine a downlink bearer of the second service data. In an example, the first network device may determine the downlink bearer of the second service data based on quality of service (Quality of Service, QoS) information sent by the terminal and uplink overheads for transmitting the first service data.

Specifically, in S52 in this example, in addition to sending the first service data and the second identifier to the first network device, the terminal may further send the QoS information to the first network device, and the first network device receives the QoS information. For example, the QoS information may be added to the first service data and sent together with the first service data, or the QoS information and the first service data may be sent as two independent parts. In addition, if the QoS information and the first service data are used as two independent parts, the terminal may send the first service data and the QoS information together, or may first send the first service data and then send the QoS information, or may first send the QoS information and then send the first service data. This is not limited in this example. The first network device may learn the uplink overheads for transmitting the first service data. Therefore, the first network device may correspondingly deduce, based on the received QoS information and the uplink overheads for transmitting the first service data, downlink QoS information that needs to be satisfied for transmitting the second service data. For example, the first network device may deduce, based on the received QoS information and the uplink overheads for transmitting the first service data, a latency that needs to be satisfied by the downlink bearer for transmitting the second service data. Alternatively, for example, if the first network device determines, based on the received QoS information, an uplink packet loss rate for transmitting the first service data, a packet loss rate that the downlink bearer for transmitting the second service data needs to satisfy may be deduced based on the uplink packet loss rate and the uplink overheads for transmitting the first service data. Certainly, the foregoing is only an example. A manner in which the first network device determines the downlink QoS information is not limited in this example. After determining the downlink QoS information, the first network device may select the downlink bearer for the second service data based on the downlink QoS information, and determine the downlink bearer for transmitting the second service data.

Subsequently, the first network device transmits the second service data, based on the determined downlink transmission mode, that is, the selected downlink broadcast mode, by using the selected downlink bearer. To be specific, the terminal receives the first service data transmitted by the first network device in the first transmission mode. Actually, the terminal receives the second service data transmitted by the first network device in the first transmission mode.

According to the technical solution provided in this example, the first service data is directly transmitted in a loopback manner by using the base station without using the core network, and the redundant step in the data transmission process is removed, thereby shortening the data transmission path and reducing the data transmission latency.

Devices provided in the examples are described below with reference to the accompanying drawings.

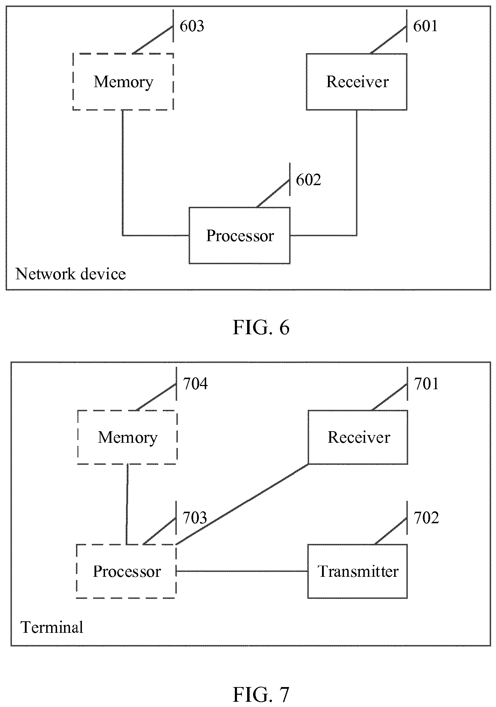

Referring to FIG. 6, an example provides a network device. The network device includes a receiver 601 and a processor 602.

The processor 602 may include a central processing unit (central processor unit, CPU) or an application-specific integrated circuit (Application Specific Integrated Circuit, ASIC), one or more integrated circuits configured to control program execution, a hardware circuit developed by using a field programmable gate array (Field Programmable Gate Array, FPGA), or a baseband chip.

The receiver 601 is, for example, an antenna or a communications interface, and is configured to communicate with an external device.

In a possible implementation, the network device may further include a memory 603, which is shown in FIG. 6 together with the receiver 601 and the processor 602. The memory 603 is not a mandatory component, and therefore is drawn in a form of a dashed-line box in FIG. 6, to be distinguished from the mandatory components. There may be one or more memories 603. The memory 603 may include a read-only memory (Read Only Memory, ROM), a random access memory (Random Access Memory, RAM), a magnetic disk memory, or the like. The memory 603 may be configured to store program code required by the processor 602 for executing a task, and may be further configured to store data.

The receiver 601 and the memory 603 may be connected to the processor 602 by using a system bus, or may be each connected to the processor 602 by using a dedicated connection cable (this is used as an example in FIG. 6).

The receiver 601 is configured to receive first service data and a second identifier that are sent by a terminal. The processor 602 is configured to: obtain first configuration information, where the first configuration information includes a first identifier and a first transmission mode corresponding to the first identifier, and the first transmission mode corresponding to the first identifier is a mode in which transmission is performed by using an access network; determine a transmission mode of the first service data based on the first identifier, the second identifier, and the first transmission mode; and transmit the first service data based on the determined transmission mode.

Specifically, the receiver 601 may be configured to perform S52 in the example shown in FIG. 5, and if the first network device in S51 in the example shown in FIG. 5 receives the control signaling sent by the MME, the receiver 601 is also configured to perform S51, and/or support another process of the technologies described in this specification. The processor 602 may be configured to perform S51, S53, and S54 in the example shown in FIG. 5, and/or support another process of the technologies described in this specification. All related content of the steps in the foregoing method example may be cited in functional descriptions of corresponding functional modules, and details are not described herein again.

The network device may be the first network device in the example shown in FIG. 5.

Referring to FIG. 7, an example provides a terminal. The terminal includes a receiver 701 and a transmitter 702.

The receiver 701 is, for example, an antenna or a communications interface, and is configured to communicate with an external device.

The transmitter 702 is, for example, an antenna or a communications interface, and is configured to communicate with the external device.

In a possible implementation, the terminal may further include a processor 703, which is shown in FIG. 7 together with the receiver 701 and the transmitter 702. The processor 703 is not a mandatory component, and therefore is drawn in a form of a dashed box in FIG. 7, to be distinguished from the mandatory components. The processor 703 may include a CPU or an ASIC, one or more integrated circuits configured to control program execution, a hardware circuit developed by using an FPGA, or a baseband chip.

In a possible implementation, the terminal may further include a memory 704, which is shown in FIG. 7 together with the receiver 701 and the transmitter 702. The memory 704 is not a mandatory component, and therefore is drawn in a form of a dashed-line box in FIG. 7, to be distinguished from the mandatory components. There may be one or more memories 704. The memory 704 may include a ROM, a RAM, a magnetic disk memory, and the like. The memory 704 may be configured to store program code required by the processor 703 for executing a task, and may be further configured to store data.

The receiver 701, the transmitter 702, and the memory 704 may be connected to the processor 703 by using a system bus, or may be each connected to the processor 703 by using a dedicated connection cable (this is used as an example in FIG. 7).

The transmitter 702 is configured to send first service data and a second identifier to a first network device, where the second identifier is used by the first network device to determine a transmission mode of the first service data. The receiver 701 is configured to receive second service data transmitted by the first network device in a first transmission mode. The first transmission mode is determined based on the second identifier and is a mode in which transmission is performed by using an access network, and the second service data is service data obtained by converting the first service data to downlink data when the first service data is transmitted by using the access network. For how the first network device determines the transmission mode of the first service data, refer to the related description in the example shown in FIG. 5.

Specifically, the transmitter 702 may be configured to perform S52 in the example shown in FIG. 5, and/or support another process of the technologies described in this specification. The receiver 701 may be configured to perform S54 in the example shown in FIG. 5, and/or support another process of the technologies described in this specification. All related content of the steps in the foregoing method example may be cited in functional descriptions of corresponding functional modules, and details are not described herein again.

The terminal may be the terminal in the example shown in FIG. 5.

In addition, the network device provided in the example shown in FIG. 6 may alternatively be implemented in another form. For example, the network device includes a receiving unit and a processing unit that are connected to each other. The receiving unit may be configured to perform S52 in the example shown in FIG. 5, and if the first network device in S51 in the example shown in FIG. 5 receives the control signaling sent by the MME, the receiving unit is also configured to perform S51, and/or support another process of the technologies described in this specification. The processing unit may be configured to perform S51, S53, and S54 in the example shown in FIG. 5, and/or support another process of the technologies described in this specification. All related content of the steps in the foregoing method example may be cited in functional descriptions of corresponding functional modules, and details are not described herein again.

In addition, the terminal provided in the example shown in FIG. 7 may alternatively be implemented in another form. For example, the terminal includes a sending unit and a receiving unit. The sending unit may be configured to perform S52 in the example shown in FIG. 5, and/or support another process of the technologies described in this specification. The receiving unit may be configured to perform S54 in the example shown in FIG. 5, and/or support another process of the technologies described in this specification. All related content of the steps in the foregoing method example may be cited in functional descriptions of corresponding functional modules, and details are not described herein again.

Because the network device and the terminal provided in this example may be configured to perform the service data transmission method, for technical effects that can be achieved by the network device and the terminal, refer to the foregoing method example, and details are not described herein again.

The examples are described with reference to the flowcharts and/or block diagrams of the method, the device (system), and the computer program product according to the examples. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

All or some of the foregoing examples may be implemented by using software, hardware, firmware, or any combination thereof. When software is used to implement the examples, the examples may be implemented completely or partially in a form of a computer program product. The computer program product includes one or more computer instructions. When the computer program instructions are loaded and executed on the computer, the procedure or functions according to the examples are all or partially generated. The computer may be a general-purpose computer, a special-purpose computer, a computer network, or another programmable apparatus. The computer instructions may be stored in a computer-readable storage medium or may be transmitted from a computer-readable storage medium to another readable storage medium. For example, the computer instructions may be transmitted from a website, computer, server, or data center to another web site, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Obviously, a person skilled in the art can make various modifications without departing from the scope of this application. This application is intended to cover these modifications provided that they fall within the scope of protection defined by the following claims.

## Claims

1. A service data transmission method for a vehicle-to-everything, V2X, service, comprising:
obtaining (S51), by a first network device, first configuration information, wherein the first configuration information comprises a first identifier and a first transmission mode corresponding to the first identifier, and the first transmission mode corresponding to the first identifier is a mode in which transmission is performed by using an access network;
receiving, by the first network device, first service data and a second identifier that are sent by a terminal;
determining (S53), by the first network device based on the first identifier and the second identifier, that a transmission mode of the first service data is the first transmission mode; and
transmitting (S54), by the first network device, the first service data based on the first transmission mode; wherein
the transmitting (S54), by the first network device, the first service data based on the first transmission mode is directly and locally performed without using a core network.

2. The method according to claim 1, wherein the obtaining (S51), by a first network device, first configuration information comprises:
obtaining, by the first network device, preconfigured information, wherein the preconfigured information comprises the first configuration information; or
receiving, by the first network device, control signaling sent by a second network device, wherein the control signaling carries the first configuration information.

3. The method according to claim 1 or 2, wherein
the first identifier is a data radio bearer identifier between the terminal and the first network device, a flow identifier of a service flow to which the first service data belongs, or a specific field in the flow identifier or the data radio bearer identifier; and
the second identifier is the data radio bearer identifier between the terminal and the first network device, the flow identifier of the service flow to which the first service data belongs, or the specific field in the flow identifier or the data radio bearer identifier, wherein
the first identifier and the second identifier are identifiers of a same type or of different types.

4. The method according to claim 1 or 2, wherein the transmitting (S54), by the first network device, the first service data based on the first transmission mode comprises:
determining, by the first network device, a downlink transmission mode of second service data based on a service type of the first service data, wherein the second service data is service data obtained by converting the first service data to downlink data when the first service data is transmitted by using the access network, and the downlink transmission mode is a downlink broadcast mode; and
transmitting, by the first network device, the second service data based on the determined downlink transmission mode.

5. The method according to claim 4, wherein the first service data further carries quality of service information, and the method further comprises:
determining, by the first network device based on the quality of service information and uplink overheads for transmitting the first service data, downlink quality of service information that needs to be satisfied for transmitting the second service data; and
selecting, by the first network device, a downlink bearer for the second service data based on the downlink quality of service information.

6. A service data transmission method for a vehicle-to-everything, V2X, service, comprising:
sending (S52), by a terminal, first service data and a second identifier to a first network device, wherein the second identifier is used by the first network device to determine a transmission mode of the first service data; and
receiving, by the terminal, second service data transmitted by the first network device in a first transmission mode, wherein the first transmission mode is determined based on the second identifier and is a mode in which transmission is performed by using an access network, and the second service data is service data obtained by converting the first service data to downlink data when the first service data is transmitted by using the access network; wherein
the receiving, by the terminal, second service data transmitted by the first network device in a first transmission mode is directly and locally performed without using a core network.

7. The method according to claim 6, wherein the second identifier is a data radio bearer identifier between the terminal and the first network device, a flow identifier of a service flow to which the first service data belongs, or a specific field in the flow identifier or the data radio bearer identifier.

8. The method according to claim 6 or 7, wherein the method further comprises:
sending, by the terminal, a second broadcast indication to the first network device, wherein the second broadcast indication is used by the first network device to determine a downlink broadcast mode of the second service data, the downlink broadcast mode comprises broadcasting in a cell in which the first network device is located, or transmitting the second service data to a cell in which a neighboring first network device is located for broadcasting, or broadcasting in a cell in which the first network device is located and transmitting the second service data to a cell in which a neighboring first network device is located for broadcasting.

9. A network device configured to be used for a vehicle-to-everything, V2X, service, comprising:
a processor (602), configured to obtain (S51) first configuration information, wherein the first configuration information comprises a first identifier and a first transmission mode corresponding to the first identifier, and the first transmission mode corresponding to the first identifier is a mode in which transmission is performed by using an access network; and
a receiver (601), configured to receive (S52) first service data and a second identifier that are sent by a terminal, wherein
the processor (602) is further configured to: determine (S53), based on the first identifier and the second identifier, that a transmission mode of the first service data is the first transmission mode; and transmit (S54) the first service data based on the first transmission mode; wherein
the transmission (S54), by the processor (602), the first service data based on the first transmission mode is directly and locally performed without using a core network.

10. The network device according to claim 9, wherein
the processor (602) is further configured to:
obtain preconfigured information, wherein the preconfigured information comprises the first configuration information; or
receive, by using the receiver (601), control signaling sent by a second network device, wherein the control signaling carries the first configuration information.

11. The network device according to claim 9 or 10, wherein
the first identifier is a data radio bearer identifier between the terminal and a first network device, a flow identifier of a service flow to which the first service data belongs, or a specific field in the flow identifier or the data radio bearer identifier; and
the second identifier is the data radio bearer identifier between the terminal and the first network device, the flow identifier of the service flow to which the first service data belongs, or the specific field in the flow identifier or the data radio bearer identifier, wherein
the first identifier and the second identifier are identifiers of a same type or of different types.

12. The network device according to claim 9 or 10, wherein the processor (602) being configured to transmit (S54) the first service data based on the first transmission mode comprises:
determining a downlink transmission mode of second service data based on a service type of the first service data, wherein the second service data is service data obtained by converting the first service data to downlink data when the first service data is transmitted by using the access network, and the downlink transmission mode is a downlink broadcast mode; and
transmitting the second service data based on the determined downlink transmission mode.

13. The network device according to claim 12, wherein the first service data further carries quality of service information, and the processor (602) is further configured to:
determine (S53), based on the quality of service information and uplink overheads for transmitting the first service data, downlink quality of service information that needs to be satisfied for transmitting the second service data; and
select a downlink bearer for the second service data based on the downlink quality of service information.

14. A terminal, comprising:
a transmitter (702), configured to send (S52) first service data and a second identifier to a first network device usable for a vehicle-to-everything, V2X, service, wherein the second identifier is used by the first network device to determine a transmission mode of the first service data; and
a receiver (701), configured to receive second service data transmitted (S54) by the first network device in a first transmission mode, wherein the first transmission mode is determined based on the second identifier and is a mode in which transmission is performed by using an access network, and the second service data is service data obtained by converting the first service data to downlink data when the first service data is transmitted by using the access network; wherein
the reception, by the receiver, the first service data based on the first transmission mode is directly and locally performed without using a core network.

15. The terminal according to claim 14, wherein the second identifier is a data radio bearer identifier between the terminal and the first network device, a flow identifier of a service flow to which the first service data belongs, or a specific field in the flow identifier or the data radio bearer identifier.

16. The terminal according to claim 14 or 15, wherein the transmitter (702) is further configured to:
send a second broadcast indication to the first network device, wherein the second broadcast indication is used by the first network device to determine a downlink broadcast mode of the second service data, the downlink broadcast mode comprises broadcasting in a cell in which the first network device is located, or transmitting the second service data to a cell in which a neighboring first network device is located for broadcasting, or broadcasting in a cell in which the first network device is located and transmitting the second service data to a cell in which a neighboring first network device is located for broadcasting.

## Patentansprüche

1. Verfahren zur Übertragung von Dienstdaten für einen Fahrzeug-zu-allem-Dienst, V2X-Dienst, umfassend:
Erlangen (S51), durch ein erstes Netzwerkgerät, erster Konfigurationsinformationen, wobei die ersten Konfigurationsinformationen eine erste Kennung und einen ersten Übertragungsmodus, der der ersten Kennung entspricht, umfassen und der erste Übertragungsmodus, der der ersten Kennung entspricht, ein Modus ist, in dem Übertragung unter Verwendung eines Zugangsnetzwerks durchgeführt wird;
Empfangen, durch das erste Netzwerkgerät, von ersten Dienstdaten und einer zweiten Kennung, die von einem Endgerät gesendet werden;
Bestimmen (S53), durch das erste Netzwerkgerät, basierend auf der ersten Kennung und der zweiten Kennung, dass ein Übertragungsmodus der ersten Dienstdaten der erste Übertragungsmodus ist; und
Übertragen (S54), durch das erste Netzwerkgerät, der ersten Dienstdaten basierend auf dem ersten Übertragungsmodus; wobei
das Übertragen (S54), durch das erste Netzwerkgerät, der ersten Dienstdaten basierend auf dem ersten Übertragungsmodus direkt und lokal ohne Verwendung eines Kernnetzwerks durchgeführt wird.

2. Verfahren nach Anspruch 1, wobei das Erlangen (S51), durch ein erstes Netzwerkgerät, erster Konfigurationsinformationen Folgendes umfasst:
Erlangen, durch das erste Netzwerkgerät, von vorkonfigurierten Informationen, wobei die vorkonfigurierten Informationen die ersten Konfigurationsinformationen umfassen; oder
Empfangen, durch das erste Netzwerkgerät, von Steuersignalisierung, die von einem zweiten Netzwerkgerät gesendet wird, wobei die Steuersignalisierung die ersten Konfigurationsinformationen trägt.

3. Verfahren nach Anspruch 1 oder 2, wobei
die erste Kennung eine Datenfunkträgerkennung zwischen dem Endgerät und dem ersten Netzwerkgerät, eine Flusskennung eines Dienstflusses, zu dem die ersten Dienstdaten gehören, oder ein spezifisches Feld in der Flusskennung oder der Datenfunkträgerkennung ist; und
die zweite Kennung die Datenfunkträgerkennung zwischen dem Endgerät und dem ersten Netzwerkgerät, die Flusskennung des Dienstflusses, zu dem die ersten Dienstdaten gehören, oder das spezifische Feld in der Flusskennung oder der Datenfunkträgerkennung ist, wobei
die erste Kennung und die zweite Kennung Kennungen eines gleichen Typs oder unterschiedlicher Typen sind.

4. Verfahren nach Anspruch 1 oder 2, wobei das Übertragen (S54), durch das erste Netzwerkgerät, der ersten Dienstdaten basierend auf dem ersten Übertragungsmodus Folgendes umfasst:
Bestimmen, durch das erste Netzwerkgerät, eines Downlink-Übertragungsmodus zweiter Dienstdaten basierend auf einem Diensttyp der ersten Dienstdaten, wobei die zweiten Dienstdaten Dienstdaten sind, die durch Umwandeln der ersten Dienstdaten in Downlink-Daten erlangt werden, wenn die ersten Dienstdaten unter Verwendung des Zugangsnetzwerks übertragen werden, und der Downlink-Übertragungsmodus ein Downlink-Rundruf-Modus ist; und
Übertragen, durch das erste Netzwerkgerät, der zweiten Dienstdaten basierend auf dem bestimmten Downlink-Übertragungsmodus.

5. Verfahren nach Anspruch 4, wobei die ersten Dienstdaten ferner Dienstgüteinformationen tragen und das Verfahren ferner Folgendes umfasst:
Bestimmen, durch das erste Netzwerkgerät, basierend auf den Dienstgüteinformationen und Uplink-Overheads zum Übertragen der ersten Dienstdaten, von Downlink-Dienstgüteinformationen, die zum Übertragen der zweiten Dienstdaten erfüllt sein müssen; und
Auswählen, durch das erste Netzwerkgerät, eines Downlink-Trägers für die zweiten Dienstdaten basierend auf den Downlink-Dienstgüteinformationen.

6. Verfahren zur Übertragung von Dienstdaten für einen Fahrzeug-zu-allem-Dienst, V2X-Dienst, umfassend:
Senden (S52), durch ein Endgerät, von ersten Dienstdaten und einer zweiten Kennung an ein erstes Netzwerkgerät, wobei die zweite Kennung durch das erste Netzwerkgerät verwendet wird, um einen Übertragungsmodus der ersten Dienstdaten zu bestimmen; und
Empfangen, durch das Endgerät, von zweiten Dienstdaten, die durch das erste Netzwerkgerät in einem ersten Übertragungsmodus übertragen werden, wobei der erste Übertragungsmodus basierend auf der zweiten Kennung bestimmt wird und ein Modus ist, in dem Übertragung unter Verwendung eines Zugangsnetzwerks durchgeführt wird, und die zweiten Dienstdaten Dienstdaten sind, die durch Umwandeln der ersten Dienstdaten in Downlink-Daten erlangt werden, wenn die ersten Dienstdaten unter Verwendung des Zugangsnetzwerks übertragen werden; wobei
das Empfangen, durch das Endgerät, von zweiten Dienstdaten, die durch das erste Netzwerkgerät in einem ersten Übertragungsmodus übertragen werden, direkt und lokal ohne Verwendung eines Kernnetzwerks durchgeführt wird.

7. Verfahren nach Anspruch 6, wobei die zweite Kennung eine Datenfunkträgerkennung zwischen dem Endgerät und dem ersten Netzwerkgerät, eine Flusskennung eines Dienstflusses, zu dem die ersten Dienstdaten gehören, oder ein spezifisches Feld in der Flusskennung oder der Datenfunkträgerkennung ist.

8. Verfahren nach Anspruch 6 oder 7, wobei das Verfahren ferner Folgendes umfasst:
Senden, durch das Endgerät, einer zweiten Rundruf-Anzeige an das erste Netzwerkgerät, wobei die zweite Rundruf-Anzeige durch das erste Netzwerkgerät verwendet wird, um einen Downlink-Rundruf-Modus der zweiten Dienstdaten zu bestimmen, wobei der Downlink-Rundruf-Modus Übermitteln per Rundruf in einer Zelle, in der sich das erste Netzwerkgerät befindet, oder Übertragen der zweiten Dienstdaten an eine Zelle, in der sich ein benachbartes erstes Netzwerkgerät zum Übermitteln per Rundruf befindet, oder Übermitteln per Rundruf in einer Zelle, in der sich das erste Netzwerkgerät befindet, und Übertragen der zweiten Dienstdaten an eine Zelle, in der sich ein benachbartes erstes Netzwerkgerät zum Übermitteln per Rundruf befindet, umfasst.

9. Netzwerkgerät, das dazu konfiguriert ist, für einen Fahrzeug-zu-allem-Dienst, V2X-Dienst, verwendet zu werden, umfassend:
einen Prozessor (602), der dazu konfiguriert ist, erste Konfigurationsinformationen zu erlangen (S51), wobei die ersten Konfigurationsinformationen eine erste Kennung und einen ersten Übertragungsmodus, der der ersten Kennung entspricht, umfassen und der erste Übertragungsmodus, der der ersten Kennung entspricht, ein Modus ist, in dem Übertragung unter Verwendung eines Zugangsnetzwerks durchgeführt wird; und
einen Empfänger (601), der dazu konfiguriert ist, erste Dienstdaten und eine zweite Kennung, die von einem Endgerät gesendet werden, zu empfangen (S52), wobei
der Prozessor (602) ferner zu Folgendem konfiguriert ist:
Bestimmen (S53), basierend auf der ersten Kennung und der zweiten Kennung, dass ein Übertragungsmodus der ersten Dienstdaten der erste Übertragungsmodus ist; und Übertragen (S54) der ersten Dienstdaten basierend auf dem ersten Übertragungsmodus; wobei
die Übertragung (S54), durch den Prozessor (602), der ersten Dienstdaten basierend auf dem ersten Übertragungsmodus direkt und lokal ohne Verwendung eines Kernnetzwerks durchgeführt wird.

10. Netzwerkgerät nach Anspruch 9, wobei
der Prozessor (602) ferner zu Folgendem konfiguriert ist:
Erlangen von vorkonfigurierten Informationen, wobei die vorkonfigurierten Informationen die ersten Konfigurationsinformationen umfassen; oder
Empfangen, unter Verwendung des Empfängers (601), von Steuersignalisierung, die von einem zweiten Netzwerkgerät gesendet wird, wobei die Steuersignalisierung die ersten Konfigurationsinformationen trägt.

11. Netzwerkgerät nach Anspruch 9 oder 10, wobei
die erste Kennung eine Datenfunkträgerkennung zwischen dem Endgerät und einem ersten Netzwerkgerät, eine Flusskennung eines Dienstflusses, zu dem die ersten Dienstdaten gehören, oder ein spezifisches Feld in der Flusskennung oder der Datenfunkträgerkennung ist; und
die zweite Kennung die Datenfunkträgerkennung zwischen dem Endgerät und dem ersten Netzwerkgerät, die Flusskennung des Dienstflusses, zu dem die ersten Dienstdaten gehören, oder das spezifische Feld in der Flusskennung oder der Datenfunkträgerkennung ist, wobei
die erste Kennung und die zweite Kennung Kennungen eines gleichen Typs oder unterschiedlicher Typen sind.

12. Netzwerkgerät nach Anspruch 9 oder 10, wobei dass der Prozessor (602) dazu konfiguriert ist, die ersten Dienstdaten basierend auf dem ersten Übertragungsmodus zu übertragen (S54), Folgendes umfasst:
Bestimmen eines Downlink-Übertragungsmodus zweiter Dienstdaten basierend auf einem Diensttyp der ersten Dienstdaten, wobei die zweiten Dienstdaten Dienstdaten sind, die durch Umwandeln der ersten Dienstdaten in Downlink-Daten erlangt werden, wenn die ersten Dienstdaten unter Verwendung des Zugangsnetzwerks übertragen werden, und der Downlink-Übertragungsmodus ein Downlink-Rundruf-Modus ist; und
Übertragen der zweiten Dienstdaten basierend auf dem bestimmten Downlink-Übertragungsmodus.

13. Netzwerkgerät nach Anspruch 12, wobei die ersten Dienstdaten ferner Dienstgüteinformationen tragen und der Prozessor (602) ferner zu Folgendem konfiguriert ist:
Bestimmen (S53), basierend auf den Dienstgüteinformationen und Uplink-Overheads zum Übertragen der ersten Dienstdaten, von Downlink-Dienstgüteinformationen, die zum Übertragen der zweiten Dienstdaten erfüllt sein müssen; und
Auswählen eines Downlink-Trägers für die zweiten Dienstdaten basierend auf den Downlink-Dienstgüteinformationen.

14. Endgerät, umfassend:
einen Transmitter (702), der dazu konfiguriert ist, erste Dienstdaten und eine zweite Kennung an ein erstes Netzwerkgerät, das für einen Fahrzeug-zu-allem-Dienst, V2X-Dienst verwendbar ist, zu senden (S52), wobei die zweite Kennung durch das erste Netzwerkgerät verwendet wird, um einen Übertragungsmodus der ersten Dienstdaten zu bestimmen; und
einen Empfänger (701), der dazu konfiguriert ist, zweite Dienstdaten, die durch das erste Netzwerkgerät in einem ersten Übertragungsmodus übertragen (S54) werden, zu empfangen, wobei der erste Übertragungsmodus basierend auf der zweiten Kennung bestimmt wird und ein Modus ist, in dem Übertragung unter Verwendung eines Zugangsnetzwerks durchgeführt wird, und die zweiten Dienstdaten Dienstdaten sind, die durch Umwandeln der ersten Dienstdaten in Downlink-Daten erlangt werden, wenn die ersten Dienstdaten unter Verwendung des Zugangsnetzwerks übertragen werden; wobei
der Empfang, durch den Empfänger, der ersten Dienstdaten basierend auf dem ersten Übertragungsmodus direkt und lokal ohne Verwendung eines Kernnetzes durchgeführt wird.

15. Endgerät nach Anspruch 14, wobei die zweite Kennung eine Datenfunkträgerkennung zwischen dem Endgerät und dem ersten Netzwerkgerät, eine Flusskennung eines Dienstflusses, zu dem die ersten Dienstdaten gehören, oder ein spezifisches Feld in der Flusskennung oder der Datenfunkträgerkennung ist.

16. Endgerät nach Anspruch 14 oder 15, wobei der Transmitter (702) ferner zu Folgendem konfiguriert ist:
Senden einer zweiten Rundruf-Anzeige an das erste Netzwerkgerät, wobei die zweite Rundruf-Anzeige durch das erste Netzwerkgerät verwendet wird, um einen Downlink-Rundruf-Modus der zweiten Dienstdaten zu bestimmen, wobei der Downlink-Rundruf-Modus Übermitteln per Rundruf in einer Zelle, in der sich das erste Netzwerkgerät befindet, oder Übertragen der zweiten Dienstdaten an eine Zelle, in der sich ein benachbartes erstes Netzwerkgerät zum Übermitteln per Rundruf befindet, oder Übermitteln per Rundruf in einer Zelle, in der sich das erste Netzwerkgerät befindet, und Übertragen der zweiten Dienstdaten an eine Zelle, in der sich ein benachbartes erstes Netzwerkgerät zum Übermitteln per Rundruf befindet, umfasst.

## Revendications

1. Procédé de transmission de données de service pour un service véhicule-vers-tout, V2X, comprenant :
l'obtention (S51), par un premier dispositif de réseau, de premières informations de configuration, dans lequel les premières informations de configuration comprennent un premier identifiant et un premier mode de transmission correspondant au premier identifiant, et le premier mode de transmission correspondant au premier identifiant est un mode dans lequel la transmission est effectuée à l'aide d'un réseau d'accès ;
la réception, par le premier dispositif de réseau, de premières données de service et un second identifiant qui sont envoyés par un terminal ;
la détermination (S53), par le premier dispositif de réseau en fonction du premier identifiant et du second identifiant, qu'un mode de transmission des premières données de service est le premier mode de transmission ; et
la transmission (S54), par le premier dispositif de réseau, des premières données de service en fonction du premier mode de transmission ; dans lequel
la transmission (S54), par le premier dispositif de réseau, des premières données de service en fonction du premier mode de transmission, est effectuée directement et localement sans utiliser de réseau central.

2. Procédé selon la revendication 1, dans lequel l'obtention (S51), par un premier dispositif de réseau, de premières informations de configuration comprend :
l'obtention, par le premier dispositif de réseau, des informations préconfigurées, dans lequel les informations préconfigurées comprennent les premières informations de configuration ; ou
la réception, par le premier dispositif de réseau, d'une signalisation de commande envoyée par un second dispositif de réseau, dans lequel la signalisation de commande transporte les premières informations de configuration.

3. Procédé selon la revendication 1 ou 2, dans lequel
le premier identifiant est un identifiant de support radio de données entre le terminal et le premier dispositif de réseau, un identifiant de flux d'un flux de service auquel appartiennent les premières données de service, ou un champ spécifique dans l'identifiant de flux ou l'identifiant de support radio de données ; et
le second identifiant est l'identifiant de support radio de données entre le terminal et le premier dispositif de réseau, l'identifiant de flux du flux de service auquel appartiennent les premières données de service, ou le champ spécifique dans l'identifiant de flux ou l'identifiant de support radio de données, dans lequel
le premier identifiant et le second identifiant sont des identifiants d'un même type ou de types différents.

4. Procédé selon la revendication 1 ou 2, dans lequel la transmission (S54), par le premier dispositif de réseau, des premières données de service basées sur le premier mode de transmission comprend :
la détermination, par le premier dispositif de réseau, d'un mode de transmission en liaison descendante de secondes données de service en fonction d'un type de service des premières données de service, dans lequel les secondes données de service sont des données de service obtenues en convertissant les premières données de service en données de liaison descendante lorsque les premières données de service sont transmises à l'aide du réseau d'accès, et le mode de transmission en liaison descendante est un mode de diffusion en liaison descendante ; et
la transmission, par le premier dispositif de réseau, des secondes données de service en fonction du mode de transmission en liaison descendante déterminé.

5. Procédé selon la revendication 4, dans lequel les premières données de service transportent également des informations de qualité de service, et le procédé comprend également :
la détermination, par le premier dispositif de réseau, en fonction des informations de qualité de service et des surdébits de liaison montante pour transmettre les premières données de service, des informations de qualité de service de liaison descendante qui doivent être satisfaites pour transmettre les secondes données de service ; et
la sélection, par le premier dispositif de réseau, d'une porteuse de liaison descendante pour les secondes données de service en fonction des informations de qualité de service de liaison descendante.

6. Procédé de transmission de données de service pour un service véhicule-vers-tout, V2X, comprenant :
l'envoi (S52), par un terminal, de premières données de service et d'un second identifiant à un premier dispositif de réseau, dans lequel le second identifiant est utilisé par le premier dispositif de réseau pour déterminer un mode de transmission des premières données de service ; et
la réception, par le terminal, de secondes données de service transmises par le premier dispositif de réseau dans un premier mode de transmission, dans lequel le premier mode de transmission est déterminé en fonction du second identifiant et est un mode dans lequel la transmission est effectuée à l'aide d'un réseau d'accès, et les secondes données de service sont des données de service obtenues en convertissant les premières données de service en données de liaison descendante lorsque les premières données de service sont transmises à l'aide du réseau d'accès ; dans lequel
la réception, par le terminal, de secondes données de service transmises par le premier dispositif de réseau dans un premier mode de transmission est effectuée directement et localement sans utiliser de réseau central.

7. Procédé selon la revendication 6, dans lequel le second identifiant est un identifiant de support radio de données entre le terminal et le premier dispositif de réseau, un identifiant de flux d'un flux de service auquel appartiennent les premières données de service, ou un champ spécifique dans l'identifiant de flux ou l'identifiant de support radio de données.

8. Procédé selon la revendication 6 ou 7, dans lequel le procédé comprend également :
l'envoi, par le terminal, d'une seconde indication de diffusion au premier dispositif de réseau, dans lequel la seconde indication de diffusion est utilisée par le premier dispositif de réseau pour déterminer un mode de diffusion en liaison descendante des secondes données de service, le mode de diffusion en liaison descendante comprend la diffusion dans une cellule dans laquelle se trouve le premier dispositif de réseau, ou la transmission des secondes données de service à une cellule dans laquelle se trouve un premier dispositif de réseau voisin pour diffusion, ou la diffusion dans une cellule dans laquelle se trouve le premier dispositif de réseau et la transmission des secondes données de service à une cellule dans laquelle se trouve un premier dispositif de réseau voisin pour diffusion.

9. Dispositif de réseau configuré pour être utilisé pour un service véhicule-vers-tout, V2X, comprenant :
un processeur (602), configuré pour obtenir (S51) de premières informations de configuration, dans lequel les premières informations de configuration comprennent un premier identifiant et un premier mode de transmission correspondant au premier identifiant, et le premier mode de transmission correspondant au premier identifiant est un mode dans lequel la transmission est effectuée à l'aide d'un réseau d'accès ; et
un récepteur (601), configuré pour recevoir (S52) des premières données de service et un second identifiant qui sont envoyés par un terminal, dans lequel
le processeur (602) est également configuré pour : déterminer (S53), en fonction du premier identifiant et du second identifiant, qu'un mode de transmission des premières données de service est le premier mode de transmission ; et transmettre (S54) les premières données de service en fonction du premier mode de transmission ;
dans lequel
la transmission (S54), par le premier processeur (602), des premières données de service en fonction du premier mode de transmission, est effectuée directement et localement sans utiliser de réseau central.

10. Dispositif de réseau selon la revendication 9, dans lequel le processeur (602) est également configuré pour :
obtenir des informations préconfigurées, dans lequel les informations préconfigurées comprennent les premières informations de configuration ; ou
recevoir, à l'aide du récepteur (601), une signalisation de commande envoyée par un second dispositif de réseau, dans lequel la signalisation de commande transporte les premières informations de configuration.

11. Dispositif de réseau selon la revendication 9 ou 10, dans lequel
le premier identifiant est un identifiant de support radio de données entre le terminal et un premier dispositif de réseau, un identifiant de flux d'un flux de service auquel appartiennent les premières données de service, ou un champ spécifique dans l'identifiant de flux ou l'identifiant de support radio de données ; et
le second identifiant est l'identifiant de support radio de données entre le terminal et le premier dispositif de réseau, l'identifiant de flux du flux de service auquel appartiennent les premières données de service, ou le champ spécifique dans l'identifiant de flux ou l'identifiant de support radio de données, dans lequel
le premier identifiant et le second identifiant sont des identifiants d'un même type ou de types différents.

12. Dispositif de réseau selon la revendication 9 ou 10, dans lequel le processeur (602) étant configuré pour transmettre (S54) les premières données de service en fonction du premier mode de transmission comprend :
la détermination d'un mode de transmission en liaison descendante de secondes données de service en fonction d'un type de service des premières données de service, dans lequel les secondes données de service sont des données de service obtenues en convertissant les premières données de service en données de liaison descendante lorsque les premières données de service sont transmises à l'aide du réseau d'accès, et le mode de transmission en liaison descendante est un mode de diffusion en liaison descendante ; et
la transmission des secondes données de service en fonction du mode de transmission en liaison descendante déterminé.

13. Dispositif de réseau selon la revendication 12, dans lequel les premières données de service transportent également des informations de qualité de service, et le processeur (602) est également configuré pour :
déterminer (S53), en fonction des informations de qualité de service et des surdébits de liaison montante pour transmettre les premières données de service, des informations de qualité de service de liaison descendante qui doivent être satisfaites pour transmettre les secondes données de service ; et
sélectionner une porteuse de liaison descendante pour les secondes données de service en fonction des informations de qualité de service de liaison descendante.

14. Terminal, comprenant :
un émetteur (702), configuré pour envoyer (S52) des premières données de service et un second identifiant à un premier dispositif de réseau utilisable pour un service véhicule-vers-tout, V2X, dans lequel le second identifiant est utilisé par le premier dispositif de réseau pour déterminer un mode de transmission des premières données de service ; et
un récepteur (701), configuré pour recevoir de secondes données de service transmises (S54) par le premier dispositif de réseau dans un premier mode de transmission, dans lequel le premier mode de transmission est déterminé en fonction du second identifiant et est un mode dans lequel la transmission est effectuée à l'aide d'un réseau d'accès, et les secondes données de service sont des données de service obtenues en convertissant les premières données de service en données de liaison descendante lorsque les premières données de service sont transmises à l'aide du réseau d'accès ;
dans lequel
la réception, par le premier récepteur, des premières données de service en fonction du premier mode de transmission, est effectuée directement et localement sans utiliser de réseau central.

15. Terminal selon la revendication 14, dans lequel le second identifiant est un identifiant de support radio de données entre le terminal et le premier dispositif de réseau, un identifiant de flux d'un flux de service auquel appartiennent les premières données de service, ou un champ spécifique dans l'identifiant de flux ou l'identifiant de support radio de données.

16. Terminal selon la revendication 14 ou 15, dans lequel l'émetteur (702) est également configuré pour :
envoyer une seconde indication de diffusion au premier dispositif de réseau, dans lequel la seconde indication de diffusion est utilisée par le premier dispositif de réseau pour déterminer un mode de diffusion en liaison descendante des secondes données de service, le mode de diffusion en liaison descendante comprend la diffusion dans une cellule dans laquelle se trouve le premier dispositif de réseau, ou la transmission des secondes données de service à une cellule dans laquelle se trouve un premier dispositif de réseau voisin pour diffusion, ou la diffusion dans une cellule dans laquelle se trouve le premier dispositif de réseau et la transmission des secondes données de service à une cellule dans laquelle se trouve un premier dispositif de réseau voisin pour diffusion.
